# EUROPÄISCHE PATENTSCHRIFT

(11) **EP 1 268 221 B1**
(45) Veröffentlichungstag und Bekanntmachung des Hinweises auf die Patenterteilung: **06.10.2004**
(21) Anmeldenummer: 00989796.8
(22) Anmeldetag: 22.11.2000
(51) Int. Cl.: B44C 1/17, B32B 15/12, B44C 1/14

(54) **DEKORFOLIE**
DECORATIVE FILM
FEUILLE DECORATIVE

(30) Priorität: 16.02.2000 DE 20002802 U
(43) Veröffentlichungstag der Anmeldung: 02.01.2003
(73) Patentinhaber: LEONHARD KURZ GMBH & CO., 90763 Fürth (DE)
(72) Erfinder: WAGNER, Nikolas, Philadelphia, PA 16109 (US); RAUTH, Bernhard, 91126 Schwabach (DE)
(74) Vertreter: LOUIS- PÖHLAU- LOHRENTZ
(86) Internationale Anmeldenummer: PCT/DE2000/004137
(87) Internationale Veröffentlichungsnummer: WO 2001/060634

(56) Entgegenhaltungen:
- DE-A- 2 747 241
- US-A- 4 902 364
- US-A- 5 948 282

## Beschreibung

Die Erfindung betrifft eine Dekorfolie insbesondere zur Applizierung an Bilderrahmenleisten gemäß dem Oberbegriff des Anspruchs 1.

Zur Dekoration von Bilderrahmenleisten sind beispielsweise Heißprägefolien mit einem Holzdekor bekannt. Solche Heißprägefolien sind z.B. unter der Marke Touchwood im Handel erhältlich. Sie werden auf die Bilderrahmenleisten direkt und unmittelbar aufgeprägt. Die Produktionsgeschwindigkeiten sind hierbei relativ gering. Mit solchen Heißprägefolien sind auch metallische Spiegel der zeitaufwendig beprägten Bilderrahmenleisten realisierbar. Die Bilderrahmenleisten können aus Holz oder aus einem Kunststoffmaterial wie geschäumtem Polyester bestehen.

Desweiteren ist es bekannt, Bilderrahmenleisten mit bedrucktem Papier zu applizieren. Dieses Applizieren kann in handelsüblichen Ummantelungsmaschinen mit hohen Produktionsgeschwindigkeiten erfolgen. Ein metallischer Spiegel ist bei solchen metallisierten Papieren infolge der Porosität bzw. Oberflächenrauhigkeit des Papieres nicht bzw. nur äußerst beschränkt realisierbar.

Der Erfindung liegt die Aufgabe zugrunde, eine Dekorfolie der eingangs genannten Art zu schaffen, die den Vorteil der hohen Produktionsgeschwindigkeit von Ummantelungsmaschinen mit der Möglichkeit eines metallischen Dekors, d.h. metallischen Spiegels der mit der Dekorfolie applizierten Bilderrahmenleiste kombiniert.

Des weiteren beschreibt die DE 27 47 241 A1 ein Verfahren zur Herstellung eines Etiketts für Flaschen, bei dem eine Lack- und Metallschicht mittels eines Transfer-Verfahrens auf einen Papier-Träger übertragen wird. Bei dieser Übertragung wird die von der Lackschicht und Metallschicht gebildete Übertragungslage von einer Trägerfolie gelöst, die anschließend aufgespult und wieder verwendet wird.

Diese Aufgabe wird bei einer Dekorfolie der eingangs genannten Art erfindungsgemäß durch eine Ausgestaltung gemäß der Lehre von Anspruch 1 gelöst, bei der eine Papierfolie mittels einer Kleberschicht mit einem Mehrlagenprodukt flächig verbunden ist, das eine Metallschicht und eine Dekorschicht aufweist, wobei die Metallschicht an die Kleberschicht angrenzt. Bei dieser Kleberschicht kann es sich um eine Laminiergrundierung handeln, mittels welcher das Mehrlagenprodukt aus Metallschicht und Dekorschicht mit der Papierfolie festhaftend flächig verbunden wird. Durch das festhaftende Zusammenlaminieren des Mehrlagenproduktes mit der Papierfolie ergibt sich der wesentliche Vorteil, daß die erfindungsgemäße Dekorfolie metallischen Dekors bzw. metallischen Spiegels in bekannten Ummantelungsmaschinen mit hoher Produktionsgeschwindigkeit auf Bilderrahmenleisten applizierbar ist. Mit der erfindungsgemäßen Dekorfolie können also die hohen Geschwindigkeiten der an sich bekannten Papierapplikation von Bilderrahmenleisten ausgenutzt werden.

Bei der erfindungsgemäßen Dekorfolie ist im Originalzustand, d.h. bei Auslieferung an den Anwender zum Applizieren von Bilderrahmenleisten an der von der Metallschicht abgewandten Seite der Dekorschicht zweckmäßigerweise eine transparente Trägerfolie vorgesehen.

Um einen zuverlässigen Schutz des Dekors der mit der erfindungsgemäßen Dekorfolie applizierten Bilderrahmenleisten zu erzielen, ist die transparente Trägerfolie an der Dekorschicht dauerhaft fixiert. Durch eine solche Ausbildung, d.h. durch die Ausbildung der Dekorfolie mit permanent fixierter transparenter Trägerfolie ergibt sich ein verbesserter Schutz gegen Beschädigungen der Dekorschicht. Ein weiterer Vorteil einer solchen erfindungsgemäßen Dekorfolie besteht darin, daß die Dekorfolie in der jeweiligen Applikations- d.h. Ummantelungsmaschine mit einem höheren Bahnzug gefahren werden kann, weil die Trägerfolie zur Aufnahme der entsprechenden mechanischen Zugbelastung geeignet bzw. die Zugfestigkeit der Dekorfolie durch die transparente Trägerfolie erhöht ist. Ein weiterer Vorteil der erfindungsgemäßen Dekorfolie besteht darin, daß sie sehr temperaturstabil ist, weil die transparente Trägerfolie den Einfluß erhöhter Temperaturen auf die Dekorschicht, der zu einem Ermatten des metallischen Spiegels führen kann, reduziert.

Bei der erfindungsgemäßen Dekorfolie kann die Trägerfolie aus PES bestehen.

Die Dekorschicht der erfindungsgemäßen Dekorfolie kann eine Kratzbild-Dekorschicht sein. Desgleichen ist es möglich, daß die Dekorschicht eine vollflächige Dekorschicht mit metallischem Spiegel ist. Hierbei kann es sich um eine unifarbene vollflächige Dekorschicht mit metallischem Spiegel handeln.

Durch das Aufbringen der Dekorschicht auf die transparente Trägerfolie in einem Druckverfahren ergibt sich im Vergleich zu einem Metallisieren von Papier ein glatter und gleichmäßiger Metallspiegel. Ein weiterer Vorteil besteht darin, daß alle herkömmlichen, in der Bilderrahmenleisten-Industrie bekannten metallisierten Dekorfolien nun als mit einer Papierfolie kombiniertes Laminat hergestellt werden können.

Weitere Einzelheiten, Merkmale und Vorteile ergeben sich aus der nachfolgenden Beschreibung eines in der Zeichnung schematisch stark vergrößert und nicht maßstabsgetreu gezeichneten Ausführungsbeispiels der erfindungsgemäßen Dekorfolie allein sowie in Kombination mit einer abschnittweise verdeutlichen Bilderrahmenleiste. Es zeigen:
- Figur 1A und 1B: eine Ausbildung einer nicht erfindungsgemäßen Dekorfolie bzw. die Herstellungsschritte zu ihrer Herstellung,
- Figur 1C: die Dekorfolie gemäß Figur 1B in Kombination mit einer abschnittweise gezeichneten Bilderrahmenleiste,
- Figur 2A und 2B: Verfahrensschritte zur Herstellung einer erfindungsgemäßen Ausführungsform einer Dekorfolie, und
- Figur 2C: die Dekorfolie gemäß Figur 2B in Kombination mit einer abschnittweise gezeichneten Bilderrahmenleiste.

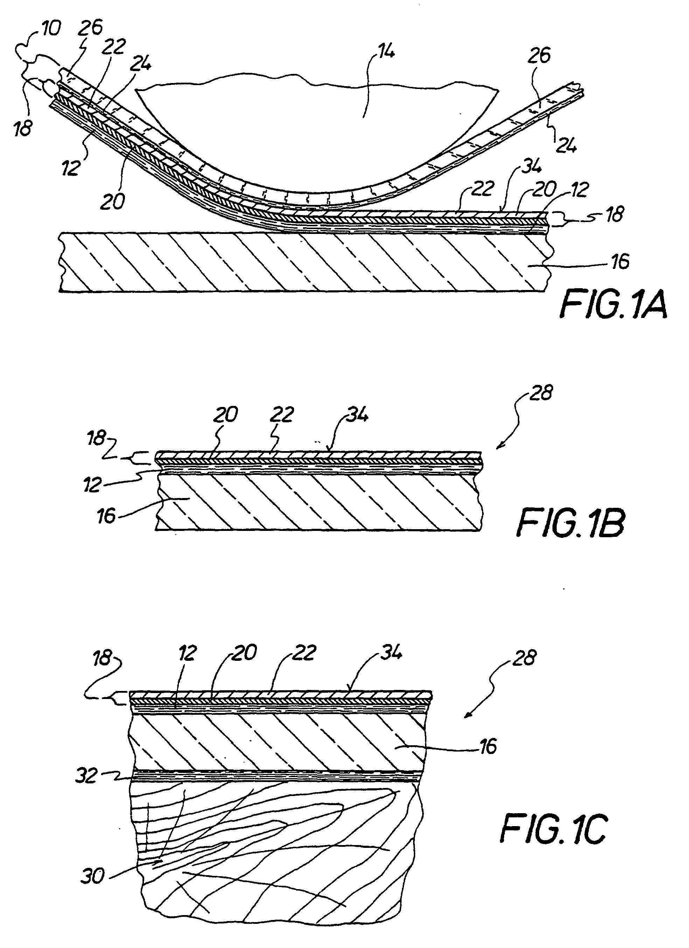

Figur 1A zeigt eine Prägefolie 10 mit einer Kleberschicht 12, die mittels einer abschnittweise gezeichneten Prägewalze 14 auf eine Papierfolie 16 aufgeprägt und mit dieser dauerhaft fest verbunden wird. Die Prägefolie 10 weist ein Mehrlagenprodukt 18 mit einer Metallschicht 20 und einer Dekorschicht 22 auf. Bei der Metallschicht 20 kann es sich um eine Aluminiumschicht und bei der Dekorschicht 22 kann es sich um einen Dekordruck handeln.

Das Mehrlagenprodukt 18 ist mittels einer Trennschicht 24, bei der es sich beispielsweise um eine dünne Wachsschicht handelt, temporär mit einer Trägerfolie 26 verbunden. Die Trägerfolie 26 und das Mehrlagenprodukt 18 mit der zwischen diesen vorgesehenen Trennschicht 24 bilden eine an sich bekannte Prägefolie. Beim Aufprägen der Prägefolie 10 auf die Papierfolie 16 wird das Mehrlagenprodukt 18 zur Papierfolie 16 transferiert und mit Hilfe der Kleberschicht 12 an der Papierfolie 16 dauerhaft fixiert. Die Trägerfolie 26 wird stromabwärts nach der Prägewalze 14 in an sich bekannter Weise an dem an der Papierfolie 16 fixierten Mehrlagenprodukt 18 getrennt, so daß sich stromabwärts nach der Prägewalze 14 die Figur 1B schematisch dargestellte Dekorfolie 28 ergibt. Die Dekorfolie 28 kann dann an einer in Figur 1C abschnittweise und geschnitten gezeichneten Bilderrahmenleiste 30 mittels einer Kleberschicht 32 appliziert werden.

Gleiche Einzelheiten sind in den Figuren 1A bis 1C jeweils mit denselben Bezugsziffem bezeichnet, so daß es sich erübrigt, in Verbindung mit diesen Figuren alle Einzelheiten jeweils detailliert zu beschreiben.

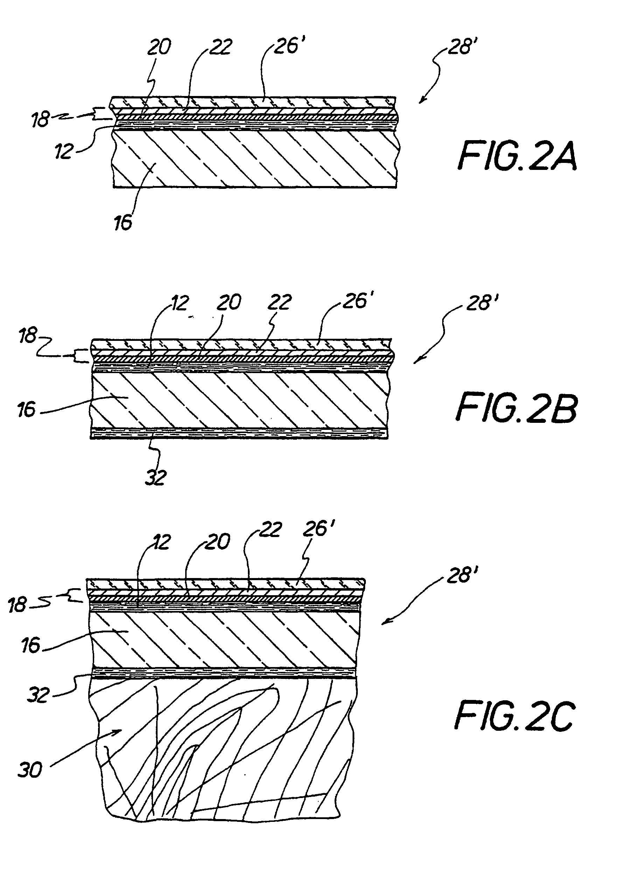

Bei der Dekorfolie 28 gemäß den Figuren 1B und 1C kann die freie Oberfläche 34 insbesondere nach der Applizierung der Dekorfolie 28 an der Bilderrahmenleiste 30 wunschgemäß lackiert werden, um einen gewünschten optischen Effekt zu erzielen. Ein Schutz der freien Oberfläche 34 und somit der Dekorschicht 22 des Mehrlagenproduktes 18 ist hierbei jedoch nur bedingt gegeben. Um einen Schutz gegen Einwirkungen von außen zu erzielen, ist erfindungsgemäß - wie aus Figur 2A ersichtlich ist - an der Dekorschicht 22 des mittels einer Kleberschicht 12 mit einer Papierfolie 16 dauerhaft verbundenen Mehrlagenproduktes 18 eine Trägerfolie 26' permanent fixiert . Die Trägerfolie 26' ist transparent und besteht aus PES.

Die solchermaßen ausgebildete Dekorfolie 28' gemäß Figur 2A wird einer an sich bekannten Laminiereinrichtung zugeführt. Dort wird die Papierfolie 16 mit einer Kleberschicht 32 bedeckt. Danach wird die mit der Kleberschicht 32 versehene Dekorfolie 28' mit Hilfe einer Ummantelungsmaschine an einer Bilderrahmenleiste 30 appliziert, was in Figur 2C schematisch verdeutlicht ist.

Gleiche Einzelheiten sind auch in den Figuren 2A bis 2C jeweils mit denselben Bezugsziffern bezeichnet, so daß es sich erübrigt, in Verbindung mit allen Figuren alle Einzelheiten jeweils detailliert zu beschreiben.

## Patentansprüche

1. Dekorfolie (28') insbesondere zur Applizierung an Bilderrahmenleisten (30), wobei eine Papierfolie (16) mittels einer Kleberschicht (12) mit einem Mehrlagenprodukt (18) flächig verbunden ist, das eine Metallschicht (20) und eine Dekorschicht (22) aufweist, wobei die Kleberschicht (12) an die Metallschicht (20) angrenzt und an der von der Metallschicht (20) abgewandten Seite der Dekorschicht (22) eine Trägerfolie (26') vorgesehen ist,
**dadurch gekennzeichnet,**
**daß** die Trägerfolie (26') eine transparente Folie ist, die an der Dekorschicht (22) dauerhaft fixiert ist.

2. Dekorfolie nach Anspruch 1,
**dadurch gekennzeichnet,**
**daß** die Trägerfolie (26') aus PES besteht.

3. Dekorfolie nach Anspruch 1 oder 2,
**dadurch gekennzeichnet,**
**daß** die Dekorschicht (22) eine Kratzbild-Dekorschicht ist.

4. Dekorfolie nach Anspruch 1 oder 2,
**dadurch gekennzeichnet,**
**daß** die Dekorschicht (22) eine vollflächige Dekorschicht mit metallischem Spiegel ist.

5. Dekorfolie nach Anspruch 4
**dadurch gekennzeichnet,**
**daß** die Dekorschicht (22) eine unifarbene vollflächige Dekorschicht mit metallischem Spiegel ist.

## Claims

1. Decorative film (28'), in particular for application to picture frame mouldings (30), a thin paper sheet (16) being joined flatly by means of an adhesive layer (12) to a multilayer product (18) which has a metal layer (20) and a decorative layer (22), the adhesive layer (12) adjoining the metal layer (20) and a carrier film (26') being provided on the side of the decorative layer (22) that faces away from the metal layer (20), **characterized in that** the carrier film (26') is a transparent film which is permanently fixed to the decorative layer (22).

2. Decorative film according to Claim 1, **characterized in that** the carrier film (26') consists of PES.

3. Decorative film according to Claim 1 or 2, **characterized in that** the decorative layer (22) is a crackle pattern decorative layer.

4. Decorative film according to Claim 1 or 2, **characterized in that** the decorative layer (22) is a full-surface decorative layer with a metallic reflecting surface.

5. Decorative film according to Claim 4, **characterized in that** the decorative layer (22) is a single-colour, full-surface decorative layer with a metallic reflecting surface.

## Revendications

1. Feuille décorative (28'), en particulier pour application sur des baguettes d'encadrement (30), une feuille de papier (16) étant reliée en nappe, au moyen d'une couche de colle (12), avec un produit multicouche (18), qui présente une couche de métal (20) et une couche décorative (22), la couche de colle (12) étant adjacente à la couche de métal (20) et une plaque support (26') étant prévue sur le côté de la couche décorative (22) détourné de la couche de métal (20), **caractérisé en ce que** la plaque support (26') est une feuille transparente, qui est fixée sur la couche décorative (22) de manière permanente.

2. Feuille décorative selon la revendication 1, **caractérisée en ce que** la plaque support (26') se compose de polyester.

3. Feuille décorative selon la revendication 1 ou 2, **caractérisée en ce que** la couche décorative (22) est une couche décorative avec image à gratter.

4. Feuille décorative selon la revendication 1 ou 2, **caractérisée en ce que** la couche décorative (22) est une couche décorative sur toute la surface avec miroir métallique.

5. Feuille décorative selon la revendication 4, **caractérisée en ce que** la couche décorative (22) est une couche décorative sur toute la surface, unie, avec miroir métallique.
